(19) **Europäisches Patentamt**
**European Patent Office**
**Office européen des brevets**

(11) **EP 4 772 846 A1**

(12) **EUROPEAN PATENT APPLICATION**
published in accordance with Art. 153(4) EPC

(43) Date of publication:
**08.07.2026 Bulletin 2026/28**

(21) Application number: **24859096.0**

(22) Date of filing: **13.06.2024**

(51) International Patent Classification (IPC):
**G01L 1/00** (2006.01)     **G01L 25/00** (2006.01)

(52) Cooperative Patent Classification (CPC):
**G01L 1/00; G01L 25/00**

(86) International application number:
**PCT/JP2024/021546**

(87) International publication number:
**WO 2025/047050 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.08.2023 JP 2023140447**

(71) Applicant: **FUJIFILM Corporation
Tokyo 106-8620 (JP)**

(72) Inventor: **OMOTO, Makoto
Tokyo 106-8620 (JP)**

(74) Representative: **Parker, Andrew James
Meissner Bolte Partnerschaft mbB
Patentanwälte Rechtsanwälte
Postfach 86 06 24
81633 München (DE)**

(54) **PRESSURE MEASURING METHOD, INFORMATION PROCESSING DEVICE, AND PROGRAM**

(57)     A color-developing member image is acquired after a pressure is applied to a color-developing member that develops color at a density in accordance with the applied pressure and a sensor device that outputs an output value in accordance with the applied pressure in a state in which the color-developing member and the sensor device are superposed. Time-series data of the output value of the sensor device during a pressure application period is acquired. Pressure distribution data indicating a surface distribution of the applied pressure is derived based on the color-developing member image. Pressure distribution time-series data indicating a temporal transition of the surface distribution of the applied pressure is derived based on the time-series data of the output value of the sensor device. A pressure value at each position and each point in time of the pressure distribution time-series data is corrected by using the pressure distribution data. A maximum height roughness Rz of a contact surface between the sensor device and the color-developing member in a case in which a pressure of 50 MPa is applied to the sensor device is 20 $\mu$m or less.

**FIG. 1**

EP 4 772 846 A1

## Description

## BACKGROUND OF THE INVENTION

1. Field of the Invention

The technology of the present disclosure relates to a pressure measurement method, an information processing device, and a program.

2. Description of the Related Art

In the related art, various technologies of measuring energy (for example, pressure, heat, and ultraviolet rays) applied to a surface are known.

First, a technology for measuring an amount of energy by using a color-developing member that changes color in accordance with an amount of applied energy is known. An example of such a color-developing member includes PRESCALE (registered trademark) (manufactured by FUJIFILM Corporation) with which a color-developing density in accordance with applied pressure is obtained. For example, WO2021/235364A discloses a technology in which a pressure measurement sheet (for example, PRESCALE) is disposed and imaged on a calibration sheet, the density, size, distortion, and shape of a captured image are corrected based on the calibration sheet included in the captured image, and a density value of the pressure measurement sheet included in an image after the correction is converted into a pressure value.

Second, a sensor device that outputs an electric signal in accordance with a pressure or the like by a sensor element that detects the pressure or the like is known. For example, JP2020-123119A discloses a sensor device comprising a sensing unit disposed on a substrate and including a sensor element that detects at least one of a pressure or a temperature and a storage unit that stores calibration data of the sensor element.

## SUMMARY OF THE INVENTION

An object of the technology of the present disclosure is to measure a temporal transition of a surface distribution of an applied pressure with high accuracy.

The technology of the present disclosure relates to a pressure measurement method executed by at least one processor provided in an information processing device, the pressure measurement method comprising: acquiring a color-developing member image that is a captured image after pressure application of a color-developing member that develops color at a density in accordance with an applied pressure in a case in which the pressure is applied to the color-developing member and a sensor device that outputs an output value in accordance with the applied pressure in a state in which the color-developing member and the sensor device are superposed; acquiring time-series data of the output value of the sensor device during a pressure application period; and performing a process based on the color-developing member image and the time-series data of the output value of the sensor device, in which a maximum height roughness Rz of a contact surface between the sensor device and the color-developing member in a case in which a pressure of 50 MPa is applied to the sensor device is 20 μm or less.

The process may include a process related to a surface distribution of the applied pressure based on the time-series data of the output value of the sensor device. The process may include a process using pressure distribution data indicating the surface distribution of the applied pressure and derived based on the color-developing member image, and pressure distribution time-series data indicating a temporal transition of the surface distribution of the applied pressure and derived based on the time-series data of the output value of the sensor device. The process may include a process of correcting a pressure value at each position and each point in time of the pressure distribution time-series data by using the pressure distribution data.

The sensor device may be a pressure-resistance type tactile sensor including a plurality of electrodes arranged on a surface of a substrate and a pressure-sensitive conductive member that covers the plurality of electrodes. A thickness of each of the plurality of electrodes may be 20 μm or less. Each of the plurality of electrodes may be partially embedded in the substrate such that a surface of the electrode is exposed. A pitch of the plurality of electrodes may be 1000 μm or less. The substrate that is in contact with the color-developing member may be made of a material having a hardness of a pencil hardness of 2H or higher. The sensor device may be any one of a capacitive type, a pressure-sensitive rubber type, or a TFT type.

The technology of the present disclosure relates to an information processing device comprising: at least one processor. The processor acquires a color-developing member image that is a captured image after pressure application of a color-developing member that develops color at a density in accordance with an applied pressure in a case in which the pressure is applied to the color-developing member and a sensor device that outputs an output value in accordance with the applied pressure in a state in which the color-developing member and the sensor device are superposed, acquires time-series data of the output value of the sensor device during a pressure application period, and performs a process based on the color-developing member image and the time-series data of the output value of the sensor device. A maximum height roughness Rz of a contact surface between the sensor device and the color-developing member in a case in which a pressure of 50 MPa is applied to the sensor device is 20 μm or less.

The technology of the present disclosure relates to a program causing at least one processor provided in an information processing device to execute a process comprising: acquiring a color-developing member image that is a captured image after pressure application of a color-developing member that develops color at a density in accordance with an applied pressure in a case in which the pressure is applied to the color-developing member and a sensor device that outputs an output value in accordance with the applied pressure in a state in which the color-developing member and the sensor device are superposed; acquiring time-series data of the output value of the sensor device during a pressure application period; and performing a process based on the color-developing member image and the time-series data of the output value of the sensor device. A maximum height roughness Rz of a contact surface between the sensor device and the color-developing member in a case in which a pressure of 50 MPa is applied to the sensor device is 20 $\mu$m or less.

According to the technology of the present disclosure, it is possible to measure the temporal transition of the surface distribution of the applied pressure with high accuracy.

## BRIEF DESCRIPTION OF THE DRAWINGS

FIG. 1 is a diagram illustrating an example of a pressure measurement method according to an embodiment of the technology of the present disclosure.

FIG. 2A is a planar perspective view illustrating an example of a configuration of a sensor device.

FIG. 2B is a cross-sectional view illustrating an example of the configuration of the sensor device.

FIG. 3 is a diagram illustrating an example of a hardware configuration of an information processing device.

FIG. 4A is a diagram illustrating an example of first reference data.

FIG. 4B is a diagram illustrating an example of second reference data.

FIG. 5 is a functional block diagram illustrating an example of a functional configuration of the information processing device.

FIG. 6 is a flowchart illustrating an example of a flow of a process performed by a CPU executing a pressure measurement program.

FIG. 7 is a diagram illustrating unevenness formed on a surface of the sensor device by applying a pressure.

FIG. 8 is a diagram illustrating the definition of a maximum height roughness Rz.

FIG. 9A is a diagram illustrating an example of a method of measuring the maximum height roughness Rz of a contact surface between the sensor device and a color-developing member in a case of applying the pressure to the sensor device.

FIG. 9B is a diagram illustrating an example of a method of measuring the maximum height roughness Rz of a contact surface between the sensor device and the color-developing member in a case of applying the pressure to the sensor device.

FIG. 10 is a cross-sectional view illustrating an example of a configuration of the sensor device.

## DESCRIPTION OF THE PREFERRED EMBODIMENTS

Hereinafter, an embodiment example of the technology of the present disclosure will be described with reference to the accompanying drawings. The same or equivalent components and portions in the drawings are designated by the same reference numerals, and the duplicated description will be omitted.

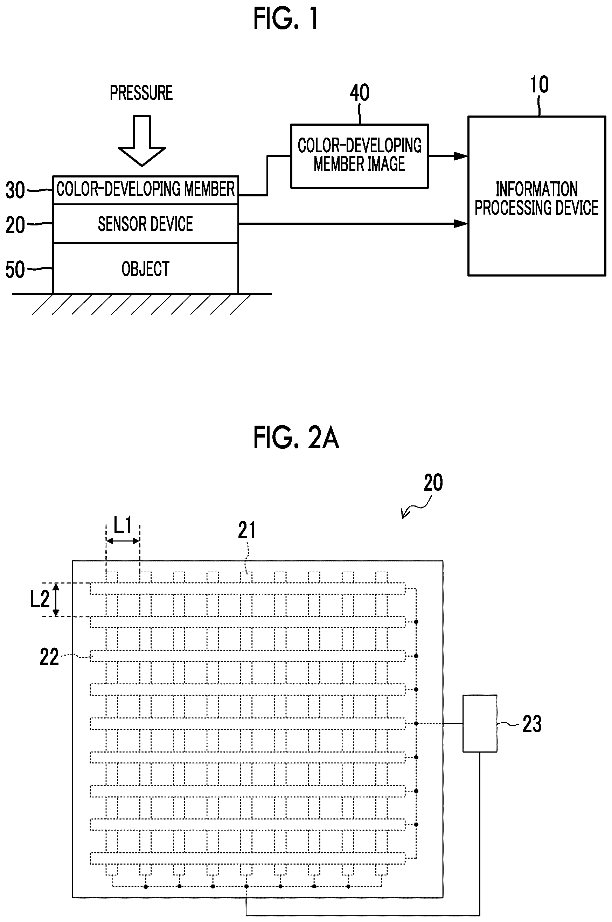

FIG. 1 is a diagram illustrating an example of a pressure measurement method according to the embodiment of the technology of the present disclosure. The pressure measurement method according to the present embodiment measures an applied pressure by using two pressure measurement units, that is, a sensor device 20 and a color-developing member 30.

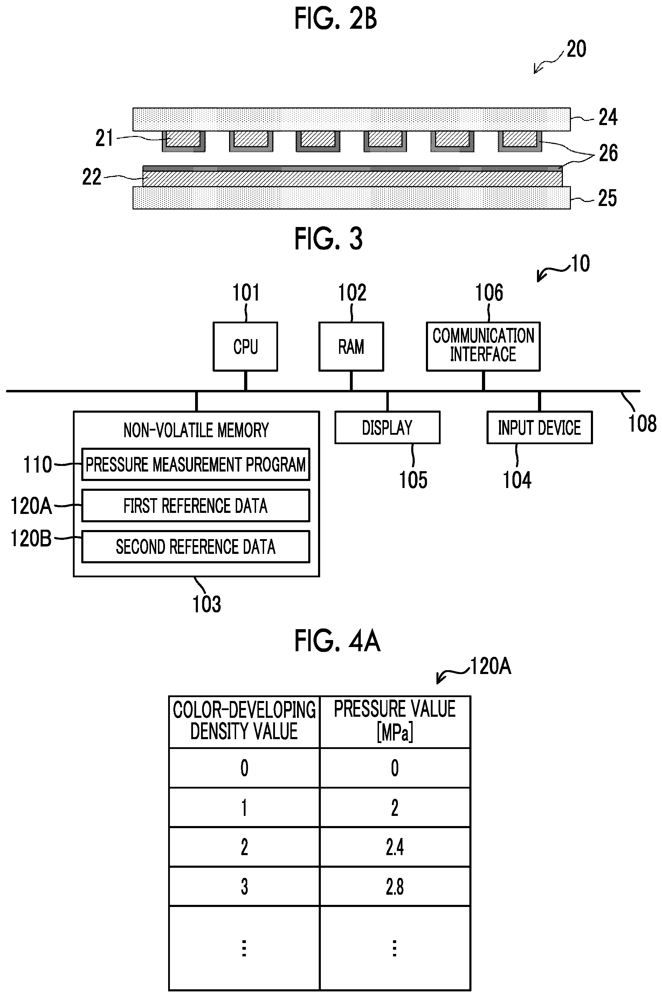

FIG. 2A is a planar perspective view illustrating an example of a configuration of the sensor device 20. FIG. 2B is a cross-sectional view illustrating an example of the configuration of the sensor device 20. The sensor device 20 is a tactile sensor that detects a pressure by a pressure-resistance type. The sensor device 20 comprises a plurality of first electrodes 21 arranged on a surface of a substrate 24 and extending in a first direction, a plurality of second electrodes 22 arranged on a surface of a substrate 25 and extending in a second direction intersecting the first direction, and a connector 23. The substrate 24 and the substrate 25 are bonded to each other such that the first electrode 21 and the second electrode 22 intersect each other. The substrate 24 and the substrate 25 are made of, for example, a resin such as polyethylene terephthalate (PET), and the first electrode 21 and the second electrode 22 are made of, for example, a metal such as Cu or Al. The surface of the first electrode 21 and the surface of the second electrode 22 are covered by a pressure-sensitive conductive member 26. The pressure-sensitive conductive member 26 is a member in which a resistance value changes in accordance with the applied pressure.

An electric signal in accordance with the resistance value at each intersection of the first electrode 21 and the second electrode 22, which are pressure detection points of the sensor device 20, is sequentially read out from each electrode. An output value obtained by converting this electric signal into a digital value is output from the connector 23. The output value of the sensor device 20 is a value proportional to a magnitude of the pressure applied to each intersection position of the first electrode 21 and the second electrode 22. The output value of the sensor device 20 is taken into an information processing device 10 connected to the connector 23.

The pressure measurement accuracy by the sensor device 20 is lower than the pressure measurement accuracy by the color-developing member 30. This is because a deviation occurs in the output value of the sensor device 20 due to plastic deformation of the substrates 24 and 25, which is caused in conjunction with the application of the pressure to the sensor device 20. In addition, in a case in which noise is mixed into the electric signal read out from each electrode of the sensor device 20, an error occurs in the output value of the sensor device 20. Meanwhile, since the output value of the sensor device 20 changes in response to the change in the applied pressure, the output value of the sensor device 20 can be acquired as time-series data. That is, by performing the pressure measurement using the sensor device 20, the temporal transition of the surface distribution of the applied pressure can be monitored.

The color-developing member 30 is a film-shaped member in which a color developer layer in which microcapsules encapsulating a colorless dye are dispersed and a color developer layer having a color developer are stacked. In a case in which the pressure is applied to the color-developing member 30, the microcapsules are broken, the colorless dye is adsorbed to the color developer, and the color developer is colored by a chemical reaction. The colorless dye is encapsulated in a plurality of types of microcapsules having different sizes and intensities. An amount of colorless dye that flows out from the broken microcapsules and is adsorbed to the color developer changes in accordance with the pressure applied to the color-developing member 30. Therefore, the color-developing member 30 develops color at a density in accordance with the applied pressure. By analyzing a color-developing state of the color-developing member 30, the surface distribution of the pressure applied to the color-developing member 30 can be monitored. The amount of colorless dye permeated into the color developer is affected by a pressure application time. Therefore, the color-developing density of the color-developing member 30 corresponds to a time-integrated amount of the applied pressure. As the color-developing member 30, for example, PRESCALE (registered trademark) manufactured by FUJIFILM Corporation can be used.

According to the pressure measurement using the color-developing member 30, the surface distribution of the static pressure can be monitored. However, since the color-developing reaction of the color-developing member 30 is irreversible, the temporal transition of the surface distribution of the pressure cannot be monitored. On the other hand, the pressure measurement accuracy by the color-developing member 30 is higher than the pressure measurement accuracy by the sensor device 20.

As described above, in the pressure measurement using the sensor device 20, there is an advantage that the temporal transition of the surface distribution of the applied pressure can be monitored, but there is a disadvantage that the pressure measurement accuracy is relatively low. In the pressure measurement using the color-developing member 30, there is an advantage that the pressure measurement accuracy is relatively high, but there is a disadvantage that the temporal transition of the surface distribution of the applied pressure cannot be monitored. The pressure measurement method according to the present embodiment realizes high-accuracy measurement of the temporal transition of the surface distribution of the applied pressure by compensating for the disadvantage of one of the sensor device 20 or the color-developing member 30 with the advantage of the other.

As illustrated in FIG. 1, the pressure measurement method according to the present embodiment includes applying the pressure to the color-developing member 30 and the sensor device 20 in a state in which the color-developing member 30 and the sensor device 20 are superposed. In addition to the color-developing member 30 and the sensor device 20, an object 50 to which the pressure is applied may be further superposed and the pressure may be applied. As a result, the pressure actually applied to the object 50 can be measured. The object 50 may be, for example, an industrial product such as a metal plate or a semiconductor wafer, or a material thereof, and the pressure measurement method according to the present embodiment can be applied in a manufacturing step of applying a pressure to the industrial product.

The pressure measurement method according to the present embodiment includes acquiring a color-developing member image 40 that is a captured image of the color-developing member 30 after the pressure application. The color-developing member image 40 is acquired as a color image. The color-developing member 30 can be imaged using a digital camera or a scanner. In a case in which the information processing device 10 comprises a digital camera, the color-developing member 30 may be imaged by the digital camera provided in the information processing device 10.

The information processing device 10 may be a portable terminal device such as a smartphone or a tablet computer, or may be a desktop or laptop personal computer.

FIG. 3 is a diagram illustrating an example of a hardware configuration of the information processing device 10. The information processing device 10 includes a central processing unit (CPU) 101, a random-access memory (RAM) 102, a non-volatile memory 103, an input device 104 including a keyboard and a mouse, a display 105, and a communication interface 106. These hardware components are connected to a bus 108.

The display 105 may be a touch panel display. The communication interface 106 is an interface for performing data communication between the information processing device 10 and the digital camera or the scanner that images the sensor device 20 and the color-developing member image 40. The communication method may be either wired or wireless. For the wireless communication, for example, a method compliant with an existing wireless communication standard such as Wi-Fi (registered trademark) and Bluetooth (registered trademark) can be applied.

The non-volatile memory 103 is a non-volatile storage medium, such as a hard disk and a flash memory. The non-volatile memory 103 stores a pressure measurement program 110, first reference data 120A, and second reference data 120B. The RAM 102 is a work memory for the CPU 101 to execute a process. The CPU 101 loads the pressure measurement program 110 stored in the non-volatile memory 103 into the RAM 102 and executes the process in accordance with the pressure measurement program 110. The CPU 101 is an example of a "processor" of the technology of the present disclosure.

FIG. 4A is a diagram illustrating an example of the first reference data 120A. The first reference data 120A is data in which a color-developing density value in the color-developing member image 40 that is a captured image of the color-developing member 30 after the pressure application and a pressure value are associated with each other. The information processing device 10 refers to the first reference data 120A in a case of deriving the pressure value applied to the color-developing member 30 based on the color-developing member image 40. The first reference data 120A may be provided by a manufacturer that manufactures the color-developing member 30. The first reference data 120A may be created based on, for example, representative characteristics that are representative of color-developing characteristics of the color-developing member 30. The color-developing density value in the first reference data 120A may be a gradation value that expresses the color-developing density in the color-developing member 30 in, for example, 256 gradations in the color-developing member image 40. The number of harmonics can be determined as appropriate.

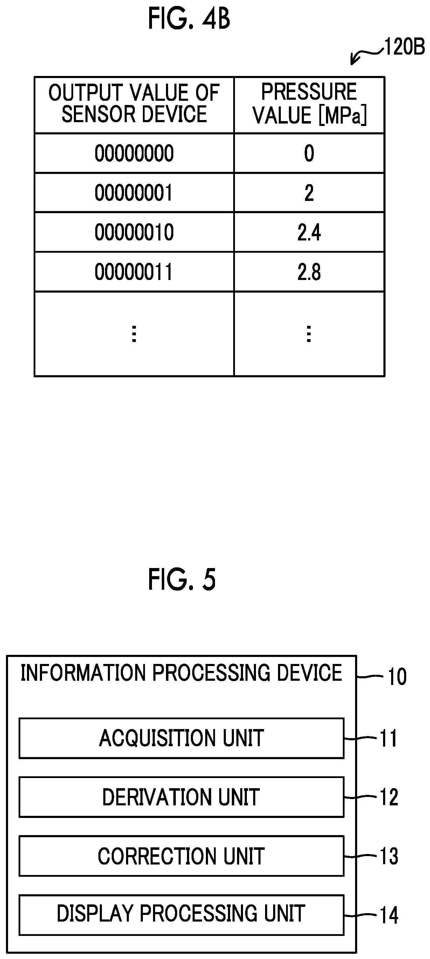

FIG. 4B is a diagram illustrating an example of the second reference data 120B. The second reference data 120B is data in which the output value of the sensor device 20 and the pressure value are associated with each other. The information processing device 10 refers to the second reference data 120B in a case of deriving the pressure value applied to the sensor device 20 based on the output value of the sensor device 20. The second reference data 120B may be provided by a manufacturer that manufactures the sensor device 20. The output value of the sensor device 20 may be an 8-bit digital value that expresses the pressure detected by the sensor device 20 in, for example, 256 steps.

FIG. 5 is a functional block diagram illustrating an example of a functional configuration of the information processing device 10. The information processing device 10 includes an acquisition unit 11, a derivation unit 12, a correction unit 13, and a display processing unit 14. In a case in which the CPU 101 executes the pressure measurement program 110, the CPU 101 functions as the acquisition unit 11, the derivation unit 12, the correction unit 13, and the display processing unit 14.

In the pressure measurement method according to the present embodiment, as illustrated in FIG. 1, the pressure is applied to the color-developing member 30 and the sensor device 20 in a state in which the color-developing member 30 and the sensor device 20 are superposed. After the pressure application is ended, the color-developing member 30 is taken out, and the color-developing surface of the color-developing member 30 is imaged by the digital camera or the scanner (not illustrated).

The acquisition unit 11 acquires the color-developing member image 40 that is a captured image of the color-developing member 30 after the pressure application. Further, the acquisition unit 11 acquires the time-series data of the output value of the sensor device 20 during a pressure application period.

The derivation unit 12 derives pressure distribution data indicating the surface distribution of the applied pressure value by using the color-developing member image 40 and the first reference data 120A acquired by the acquisition unit 11. Specifically, the derivation unit 12 performs a process of specifying the color-developing density value of each pixel of the color-developing member image 40 and deriving the pressure value corresponding to the color-developing density value by referring to the first reference data 120A for each pixel. The derivation unit 12 may derive an index value such as pressure efficiency, a pressurization area, an average pressure, a maximum pressure, a minimum pressure, weight, and pressure uniformity in addition to the pressure value by analyzing the color-developing member image 40. The pressure efficiency is a ratio of an area of a portion included in a recommended pressure range of the color-developing member 30 to a color-developing area of the color-developing member 30. The pressurization area is an area of a color-developing region of the color-developing member 30 (hereinafter, referred to as a color-developing region). The average pressure is an average value of the pressure of the color-developing region. The maximum pressure is a maximum value of the pressure of the color-developing region. The minimum pressure is a minimum value of the pressure of the color-developing region. The weight is a weighted value (pressurization area $\times$ average pressure) of the color-developing region. The pressure uniformity is an index of the uniformity of the pressure value of the color-developing region.

In addition, the derivation unit 12 derives pressure distribution time-series data indicating the temporal transition of the surface distribution of the applied pressure by using the time-series data of the output value of the sensor device 20 and the second reference data 120B acquired by the acquisition unit 11. Specifically, the derivation unit 12 performs a process of deriving the pressure value corresponding to the output value of the sensor device 20 at each point in time by referring to the second reference data 120B for each detection point of the sensor device 20.

The correction unit 13 performs a correction process of correcting a pressure value $P_{s(x,y)}(t)$ at each position and each point in time indicated by the pressure distribution time-series data based on the output value of the sensor device 20 by using the pressure distribution data based on the color-developing member image 40. Hereinafter, details of the correction process will be described.

The correction unit 13 derives the time-integrated amount of the pressure value at each detection point indicated by the pressure distribution time-series data. Hereinafter, the time-integrated amount of the pressure value for each detection point will be referred to as an integrated pressure value $P_{a(x,y)}$.

Next, the correction unit 13 derives a correction coefficient $C_{(x,y)}$ at each detection point of the sensor device 20 by dividing the pressure value $P_{c(x,y)}$ at each position indicated by the pressure distribution data based on the color-developing member image 40 by the integrated pressure value $P_{a(x,y)}$ at the same position. That is, the correction coefficient $C_{(x,y)}$ at each detection point of the sensor device 20 is represented by the following expression (1). The positions of the detection points of the sensor device 20 and the positions of the pixels of the color-developing member image 40 are defined by an x-y Cartesian coordinate system, and the pressure distribution time-series data based on the output value of the sensor device 20 and the pressure distribution data based on the color-developing member image 40 are aligned with each other using the x-y Cartesian coordinate system.

$$C_{(x,y)} = P_{c(x,y)}/P_{a(x,y)} \dots (1)$$

Next, the correction unit 13 performs a process of multiplying the pressure value $P_{s(x,y)}(t)$ at each detection point and each point in time of the pressure distribution time-series data based on the output value of the sensor device 20 by the correction coefficient $C_{(x,y)}$ for each detection point. As a result, the pressure value $P_{s(x,y)}(t)$ at each position and each point in time of the pressure distribution time-series data based on the output value of the sensor device 20 is corrected. That is, the pressure value $P_{(x,y)}(t)$ at each position and each point in time after the correction is represented by the following expression (2).

$$P_{(x,y)}(t) = P_{s(x,y)}(t) \times C_{(x,y)} \dots (2)$$

Here, it is assumed that the surface resolution of the pressure distribution data based on the color-developing member image 40 and the surface resolution of the pressure distribution time-series data based on the sensor device 20 are different from each other. Typically, the surface resolution of the pressure distribution data based on the color-developing member image 40 is higher than the surface resolution of the pressure distribution time-series data based on the sensor device 20. This is because the number of pixels of the color-developing member image 40 is usually larger than the number of pressure detection points of the sensor device 20. Therefore, for example, a process of matching the surface resolution of the pressure distribution data based on the color-developing member image 40 to the surface resolution of the pressure distribution time-series data based on the sensor device 20 may be performed. For example, in a case in which the surface resolution of the pressure distribution data based on the color-developing member image 40 is four times the surface resolution of the pressure distribution time-series data based on the sensor device 20, the resolution conversion of integrating four pixels adjacent to each other in the color-developing member image 40 into one pixel may be performed. In this case, an average value of the pixel values of the four pixels may be applied as a pixel value of one pixel to be integrated, and then the correction coefficient $C_{(x,y)}$ may be derived.

In addition, a process of matching the surface resolution of the pressure distribution time-series data based on the sensor device 20 to the surface resolution of the pressure distribution data based on the color-developing member image 40 may be performed. For example, in a case in which the surface resolution of the pressure distribution data based on the color-developing member image 40 is four times the surface resolution of the pressure distribution time-series data based on the sensor device 20, the resolution conversion of dividing one pressure detection point of the sensor device 20 into four regions may be performed. In this case, the output value at one detection point before the division may be assigned to the four regions, and then the correction coefficient $C_{(x,y)}$ may be derived for each of the four regions.

The display processing unit 14 performs a process of displaying the pressure value $P_{(x,y)}(t)$ at each position and each point in time after the correction on the display 105. The display processing unit 14 may display, for example, the pressure value at each position after the correction by a plurality of three-dimensional graphs for each point in time. Further, the display processing unit 14 displays a three-dimensional graph indicating the pressure value at each position after the correction as a video that changes over time.

In addition, the display processing unit 14 may display a two-dimensional graph indicating the temporal transition of the pressure value at the designated position.

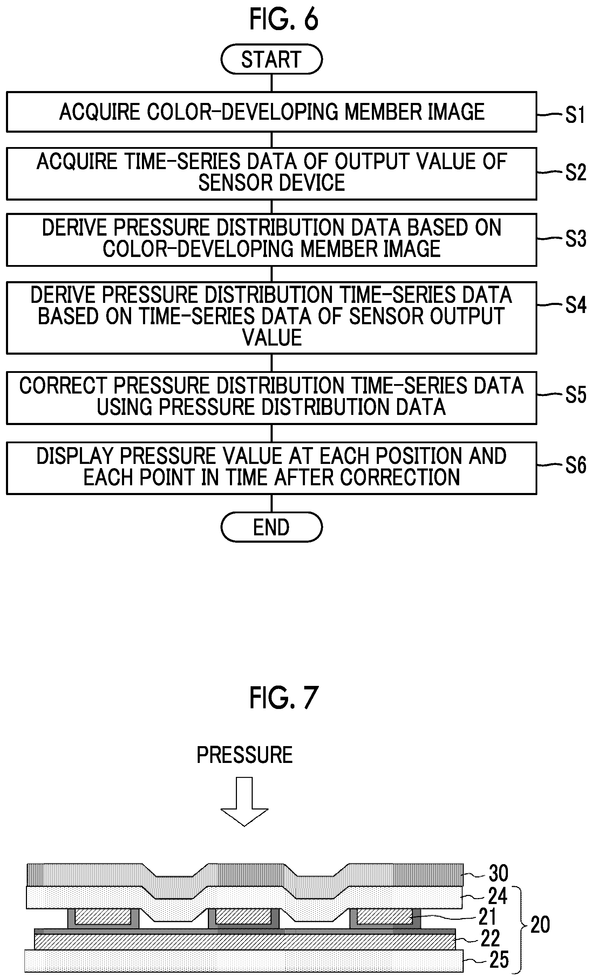

FIG. 6 is a flowchart illustrating an example of a flow of a process performed by the CPU 101 executing the pressure measurement program 110. It is assumed that, prior to the execution of the pressure measurement program 110, the pressure is applied to the color-developing member 30 and the sensor device 20 in a state in which the color-developing member 30 and the sensor device 20 are superposed. In addition, it is assumed that the color-developing member image 40 is obtained for the color-developing member 30 after the pressure application.

In step S1, the acquisition unit 11 acquires the color-developing member image 40 that is a captured image of the color-developing member 30 after the pressure application.

In step S2, the acquisition unit 11 acquires the time-series data of the output value of the sensor device 20 during the pressure application period.

In step S3, the derivation unit 12 derives the pressure distribution data indicating the surface distribution of the applied pressure value by using the color-developing member image 40 and the first reference data 120A acquired in step S1. Specifically, the derivation unit 12 performs the process of specifying the color-developing density value of each pixel of the color-developing member image 40 and deriving the pressure value corresponding to the color-developing density value by referring to the first reference data 120A for each pixel.

In step S4, the derivation unit 12 derives the pressure distribution time-series data indicating the temporal transition of the surface distribution of the applied pressure by using the time-series data of the output value of the sensor device 20 and the second reference data 120B acquired in step S2. Specifically, the derivation unit 12 performs the process of deriving the pressure value corresponding to the output value of the sensor device 20 at each point in time by referring to the second reference data 120B for each detection point of the sensor device 20.

In step S5, the correction unit 13 corrects the pressure value $P_{s(x,y)}(t)$ at each position and each point in time indicated by the pressure distribution time-series data derived in step S4 by using the pressure distribution data derived in step S3. The pressure value $P_{(x,y)}(t)$ at each position and each point in time after the correction is represented by the above expression (2).

In step S6, the display processing unit 14 performs the process of displaying the pressure value $P_{(x,y)}(t)$ at each position and each point in time after the correction on the display 105.

As described above, the pressure measurement method according to the embodiment of the technology of the present disclosure, which is executed by the information processing device 10, includes acquiring a color-developing member image 40 that is a captured image after pressure application of a color-developing member 30 that develops color at a density in accordance with an applied pressure in a case in which the pressure is applied to the color-developing member 30 and a sensor device 20 that outputs an output value in accordance with the applied pressure in a state in which the color-developing member 30 and the sensor device 20 are superposed; acquiring time-series data of the output value of the sensor device 20 during a pressure application period; deriving pressure distribution data indicating a surface distribution of the applied pressure based on the color-developing member image 40; deriving pressure distribution time-series data indicating a temporal transition of the surface distribution of the applied pressure based on the time-series data of the output value of the sensor device 20; and correcting a pressure value at each position and each point in time of the pressure distribution time-series data by using the pressure distribution data.

In the pressure measurement using the sensor device 20, there is the advantage that the temporal transition of the surface distribution of the applied pressure can be monitored, but there is the disadvantage that the pressure measurement accuracy is relatively low. In the pressure measurement using the color-developing member 30, there is the advantage that the pressure measurement accuracy is relatively high, but there is the disadvantage that the temporal transition of the surface distribution of the applied pressure cannot be monitored. With the pressure measurement method according to the present embodiment, the temporal transition of the surface distribution of the applied pressure can be measured with high accuracy by compensating for the disadvantage in the pressure measurement using the sensor device 20 and the pressure measurement using the color-developing member 30 with the advantage of the other.

Here, in a case in which the pressure is applied in a state in which the color-developing member 30 and the sensor device 20 are superposed, the following problems may arise. That is, as illustrated in FIG. 2A, the sensor device 20 includes the first electrode 21 and the second electrode 22 that are arranged in a lattice shape. The first electrode 21 and the second electrode 22 are formed on the surfaces of the substrates 24 and 25 by a film-forming method such as printing. In a case in which the thicknesses of the first electrode 21 and the second electrode 22 are large, the unevenness corresponding to the arrangement of the first electrode 21 and the second electrode 22 is formed on the surface (contact surface with the color-developing member 30) of the sensor device 20 by the pressure application as illustrated in FIG. 7, and the color-developing state of the color-developing member 30 is affected. Specifically, in the color-developing member 30, a lattice-shaped color-developing portion corresponding to the arrangement of the first electrode 21 and the second electrode 22 may occur. As described above, in the color-developing member 30, the occurrence of the color-developing portion derived from the structure of the sensor device 20 hinders the high-accuracy pressure measurement.

Therefore, in the pressure measurement method according to the embodiment of the technology of the present disclosure, the sensor device 20 in which the unevenness on the contact surface with the color-developing member 30 in a case of the pressure application is small is used. Specifically, the sensor device 20 in which the maximum height roughness Rz of the contact surface with the color-developing member 30 in a case of applying the pressure of 50 MPa is 20 $\mu$m or less is used. By setting the maximum height roughness Rz of the contact surface between the sensor device 20 and the color-developing member 30 to 20 $\mu$m or less, it is possible to suppress the influence on the color-developing state of the color-developing member 30.

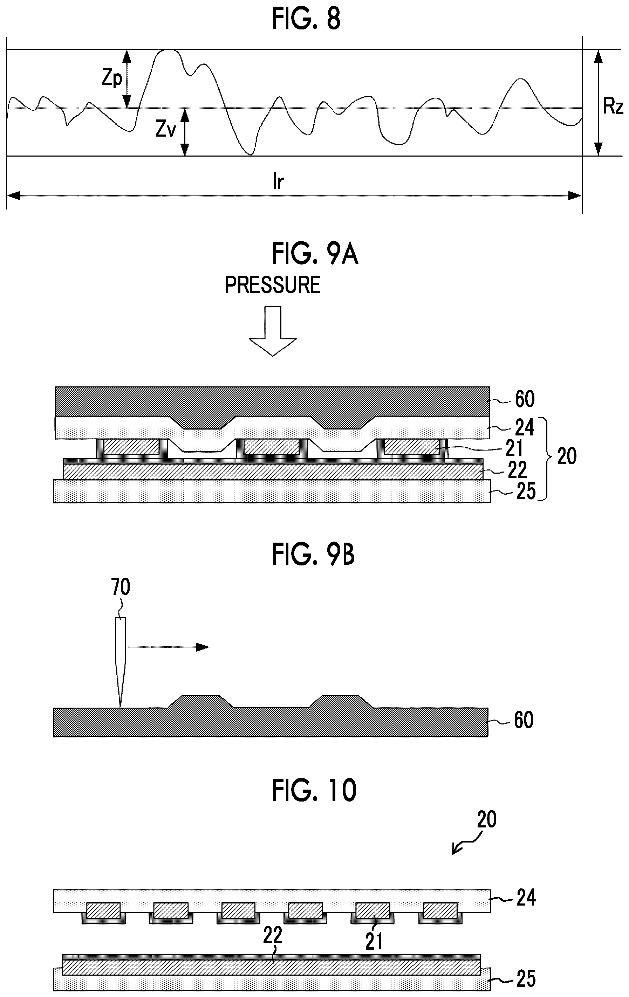

The maximum height roughness Rz is defined in JIS B0601, and is a sum of a maximum value of a peak height Zp and a maximum value of a valley depth Zv of a roughness curve in a reference length lr as illustrated in FIG. 8. The maximum height roughness Rz of the contact surface between the sensor device 20 and the color-developing member 30 in a case of the pressure application of the sensor device 20 can be measured as follows.

As illustrated in FIG. 9A, a transfer target member 60 is formed on the surface of the sensor device 20. Examples of the transfer target member 60 include an ultraviolet curable resin, a thermosetting resin, or a two-component curing type resin. The ultraviolet curable resin is not particularly limited, and examples thereof include epoxy-based (NICT series, NIAC series, manufactured by Daicel Corporation), urethane-based (Shikoku, manufactured by Mitsubishi Chemical Group Corporation), silicone-based (KER series, manufactured by Shin-Etsu Chemical Co., Ltd.), and fluorine-based (NIF series, manufactured by AGC Inc.) ultraviolet curable resins. The thermosetting resin is not particularly limited, and examples thereof include a phenol-based resin (SK Resin series, manufactured by AIR WATER INC). The two-component curing type resin is not particularly limited, and examples thereof include an epoxy-based resin (RC series, RH series, manufactured by SANYU REC.LTD.) and an urethane-based resin (RUBILON, manufactured by TOYOPOLYMER CO., LTD.). From the viewpoint of workability in the curing, it is more preferable to use a two-component curing type resin that is cured by mixing without using ultraviolet rays or heat. In addition, a mold release agent may be used together with these resins. A predetermined pressure is applied to both the sensor device 20 and the transfer target member 60 in a state in which the transfer target member 60 is superposed on the surface of the sensor device 20. Therefore, the unevenness formed on the surface of the sensor device 20 is transferred to the transfer target member 60. Then, the transfer target member 60 is cured, and then the transfer target member 60 is peeled off from the sensor device 20.

Next, as illustrated in FIG. 9B, the uneven shape transferred to the transfer target member 60 is measured using a surface roughness measurement machine. Specifically, a displacement of a stylus 70 of the surface roughness measurement machine in the up-down direction in a case in which the tip of the stylus 70 is moved in one direction while being in contact with the surface of the transfer target member 60 to which the uneven shape is transferred is recorded. As a result, the roughness curve indicating the uneven shape transferred to the transfer target member 60 is acquired.

In the sensor device 20 of the resistive type, the sensor device 20 may have the following configuration in order to set the maximum height roughness Rz of the contact surface with the color-developing member 30 to 20 $\mu$m or less. The thickness of each of the first electrode 21 and the second electrode 22 may be, for example, 20 $\mu$m or less. For example, the thickness of the first electrode 21 and the second electrode 22 can be suppressed by reducing the supply amount of the conductive member forming the first electrode 21 and the second electrode 22 or reducing the viscosity. In addition, for example, as illustrated in FIG. 10, each of the first electrode 21 and the second electrode 22 may be partially embedded in the substrates 24 and 25 such that the surface of the electrode is exposed.

Further, the pitch (arrangement interval) of each of the first electrode 21 and the second electrode 22 may be reduced. By reducing the pitch of each of the first electrode 21 and the second electrode 22, the unevenness of the substrate surface in a case in which the pressure is applied is relaxed. By setting a pitch L1 and a pitch L2 (see FIG. 2A) of each of the first electrode 21 and the second electrode 22 to, for example, 1000 $\mu$m or less, the maximum height roughness Rz of the contact surface with the color-developing member 30 can be set to 20 $\mu$m or less.

In addition, the substrates 24 and 25 of the sensor device 20 may be made of a material having a hardness of a pencil hardness of 2H or higher. As a result, it is possible to relax or eliminate the unevenness formed on the surface (contact surface with the color-developing member 30) of the sensor device 20 by the pressure application, and it is possible to suppress the influence on the color-developing state of the color-developing member 30. As the material of the substrates 24 and 25, for example, an epoxy resin (equivalent to a hardness of 2H), polyether ether ketone (PEEK, equivalent to a hardness of 3H), and glass (equivalent to a hardness of 9H) can be used.

Further, a sensor device of a type in which unevenness corresponding to the arrangement of the electrodes does not appear on the surface of the sensor device due to the structure may be used. For example, by using a sensor device of any one of a capacitive type, a pressure-sensitive rubber type, or a TFT type, the maximum height roughness Rz of the contact surface with the color-developing member 30 can be set to 20 $\mu$m or less. In any one of the capacitive type, the pressure-sensitive rubber type, or the TFT type, since the electrode is embedded in the layer or the electrode is composed of a thin film of about several micrometers, the unevenness corresponding to the arrangement of the electrode does not appear on the surface of the sensor device, and even in a case in which the unevenness appears, the color-developing state of the color-developing member 30 is not affected.

The capacitive type includes an elastic body between upper and lower electrodes, and estimates the applied pressure from a change in electrostatic capacitance caused by the deformation of the elastic body. The pressure-sensitive rubber type uses conductive rubber containing conductive powder such as carbon. In a case in which the pressure is applied to the conductive rubber, at the application portion, the density of the conductive powder increases and the resistance value decreases. Therefore, the applied pressure can be estimated from a change in the resistance value caused by the deformation of the conductive rubber. The TFT type is a combination of a thin film transistor (TFT) array sheet and a pressure-sensitive rubber sheet.

As a hardware structure for achieving various processes executed by each functional unit of the information processing device 10, various processors illustrated below can be used. As described above, in addition to the CPU that is a general-purpose processor that executes software (program) to function as various processing units, the various processors include a programmable logic device (PLD) that is a processor whose circuit configuration can be changed after manufacture, such as a field programmable gate array (FPGA), and a dedicated electric circuit that is a processor having a circuit configuration that is designed for exclusive use in order to execute a specific process, such as an application specific integrated circuit (ASIC).

One processing unit may be configured by one of the various processors or may be configured by a combination of two or more processors of the same type or different types (for example, a combination of a plurality of FPGAs or a combination of a CPU and an FPGA). Further, a plurality of processing units may be configured by one processor.

A first example of the configuration in which the plurality of processing units are configured by one processor is a form in which one processor is configured by a combination of one or more CPUs and software and the processor functions as the plurality of processing units, as represented by the computer, such as a client and a server. A second example thereof is a form in which a processor that implements the function of the entire system including the plurality of processing units by one integrated circuit (IC) chip is used, as represented by a system on a chip (SoC) or the like. In this manner, various processing units are configured by using one or more of the various processors as a hardware structure. Furthermore, as the hardware structure of the various processors, more specifically, an electric circuit (circuitry) in which circuit elements such as semiconductor elements are combined can be used.

Moreover, in the above embodiment, the aspect has been described in which the pressure measurement program 110 is stored (installed) in advance in the non-volatile memory 103, but the technology of the present disclosure is not limited to this. The pressure measurement program 110 may be provided in a state of being recorded on a recording medium, such as a compact disc read only memory (CD-ROM), a digital versatile disc read only memory (DVD-ROM), or a universal serial bus (USB) memory. Further, the pressure measurement program 110 may be downloaded from an external device via a network.

The following supplementary notes are further disclosed with respect to the above embodiment.

(Supplementary Note 1)

A pressure measurement method executed by at least one processor provided in an information processing device, the pressure measurement method comprising: acquiring a color-developing member image that is a captured image after pressure application of a color-developing member that develops color at a density in accordance with an applied pressure in a case in which the pressure is applied to the color-developing member and a sensor device that outputs an output value in accordance with the applied pressure in a state in which the color-developing member and the sensor device are superposed; acquiring time-series data of the output value of the sensor device during a pressure application period; and performing a process based on the color-developing member image and the time-series data of the output value of the sensor device, in which a maximum height roughness Rz of a contact surface between the sensor device and the color-developing member in a case in which a pressure of 50 MPa is applied to the sensor device is 20 $\mu$m or less.

(Supplementary Note 2)

The pressure measurement method according to supplementary note 1, in which the process includes a process related to a surface distribution of the applied pressure based on the time-series data of the output value of the sensor device.

(Supplementary Note 3)

The pressure measurement method according to supplementary note 2, in which the process includes a process using pressure distribution data indicating the surface distribution of the applied pressure and derived based on the color-developing member image, and pressure distribution time-series data indicating a temporal transition of the surface distribution of the applied pressure and derived based on the time-series data of the output value of the sensor device.

(Supplementary Note 4)

The pressure measurement method according to supplementary note 3, in which the process includes a process of correcting a pressure value at each position and each point in time of the pressure distribution time-series data by using the pressure distribution data.

(Supplementary Note 5)

The pressure measurement method according to any one of supplementary notes 1 to 4, in which the sensor device is a pressure-resistance type tactile sensor including a plurality of electrodes arranged on a surface of a substrate and a pressure-sensitive conductive member that covers the plurality of electrodes.

(Supplementary Note 6)

The pressure measurement method according to supplementary note 5, in which a thickness of each of the plurality of electrodes is 20 $\mu$m or less.

(Supplementary Note 7)

The pressure measurement method according to supplementary note 5 or 6, in which each of the plurality of electrodes is partially embedded in the substrate such that a surface of the electrode is exposed.

(Supplementary Note 8)

The pressure measurement method according to any one of supplementary notes 5 to 7, in which a pitch of the plurality of electrodes is 1000 $\mu$m or less.

(Supplementary Note 9)

The pressure measurement method according to any one of supplementary notes 5 to 8, in which the substrate that is in contact with the color-developing member is made of a material having a hardness of a pencil hardness of 2H or higher.

(Supplementary Note 10)

The pressure measurement device according to supplementary note 1, in which the sensor device is any one of a capacitive type, a pressure-sensitive rubber type, or a TFT type.

(Supplementary Note 11)

An information processing device comprising: at least one processor, in which the processor acquires a color-developing member image that is a captured image after pressure application of a color-developing member that develops color at a density in accordance with an applied pressure in a case in which the pressure is applied to the color-developing member and a sensor device that outputs an output value in accordance with the applied pressure in a state in which the color-developing member and the sensor device are superposed,

acquires time-series data of the output value of the sensor device during a pressure application period, and performs a process based on the color-developing member image and the time-series data of the output value of the sensor device, and a maximum height roughness Rz of a contact surface between the sensor device and the color-developing member in a case in which a pressure of 50 MPa is applied to the sensor device is 20 $\mu$m or less.

(Supplementary Note 12)

A program causing at least one processor provided in an information processing device to execute a process comprising: acquiring a color-developing member image that is a captured image after pressure application of a color-developing member that develops color at a density in accordance with an applied pressure in a case in which the pressure is applied to the color-developing member and a sensor device that outputs an output value in accordance with the applied pressure in a state in which the color-developing member and the sensor device are superposed; acquiring time-series data of the output value of the sensor device during a pressure application period; and performing a process based on the color-developing member image and the time-series data of the output value of the sensor device, in which a maximum height roughness Rz of a contact surface between the sensor device and the color-developing member in a case in which a pressure of 50 MPa is applied to the sensor device is 20 $\mu$m or less.

(Supplementary Note 13)

A pressure measurement method executed by at least one processor provided in an information processing device, the pressure measurement method comprising: acquiring a color-developing member image that is a captured image after pressure application of a color-developing member that develops color at a density in accordance with an applied pressure in a case in which the pressure is applied to the color-developing member and a sensor device that outputs an output value in accordance with the applied pressure in a state in which the color-developing member and the sensor device are superposed; acquiring time-series data of the output value of the sensor device during a pressure application period; deriving pressure distribution data indicating a surface distribution of the applied pressure based on the color-developing member image; deriving pressure distribution time-series data indicating a temporal transition of the surface distribution of the applied pressure based on the time-series data of the output value of the sensor device; and correcting a pressure value at each position and each point in time of the pressure distribution time-series data by using the pressure distribution data, in which a maximum height roughness Rz of a contact surface between the sensor device and the color-developing member in a case in which a pressure of 50 MPa is applied to the sensor device is 20 μm or less.

The disclosure of Japanese Patent Application No. 2023-140447, filed on August 30, 2023 is incorporated in the present specification in its entirety by reference. Further, all of the documents, the patent applications, and the technical standards described in the present specification are incorporated herein by reference to the same extent as in a case in which each of the documents, the patent applications, and the technical standards are specifically and individually described by being incorporated in the present specification by reference.

## Claims

1. A pressure measurement method executed by at least one processor provided in an information processing device, the pressure measurement method comprising:

   acquiring a color-developing member image that is a captured image after pressure application of a color-developing member that develops color at a density in accordance with an applied pressure in a case in which the pressure is applied to the color-developing member and a sensor device that outputs an output value in accordance with the applied pressure in a state in which the color-developing member and the sensor device are superposed;
   acquiring time-series data of the output value of the sensor device during a pressure application period; and
   performing a process based on the color-developing member image and the time-series data of the output value of the sensor device,
   wherein a maximum height roughness Rz of a contact surface between the sensor device and the color-developing member in a case in which a pressure of 50 MPa is applied to the sensor device is 20 μm or less.

2. The pressure measurement method according to claim 1,
   wherein the process includes a process related to a surface distribution of the applied pressure based on the time-series data of the output value of the sensor device.

3. The pressure measurement method according to claim 2,
   wherein the process includes a process using pressure distribution data indicating the surface distribution of the applied pressure and derived based on the color-developing member image, and pressure distribution time-series data indicating a temporal transition of the surface distribution of the applied pressure and derived based on the time-series data of the output value of the sensor device.

4. The pressure measurement method according to claim 3,
   wherein the process includes a process of correcting a pressure value at each position and each point in time of the pressure distribution time-series data by using the pressure distribution data.

5. The pressure measurement method according to any one of claims 1 to 4,
   wherein the sensor device is a pressure-resistance type tactile sensor including a plurality of electrodes arranged on a surface of a substrate and a pressure-sensitive conductive member that covers the plurality of electrodes.

6. The pressure measurement method according to claim 5,
   wherein a thickness of each of the plurality of electrodes is 20 μm or less.

7. The pressure measurement method according to claim 5,
   wherein each of the plurality of electrodes is partially embedded in the substrate such that a surface of the electrode is exposed.

8. The pressure measurement method according to claim 5,
   wherein a pitch of the plurality of electrodes is 1000 μm or less.

9. The pressure measurement method according to claim 5,
   wherein the substrate that is in contact with the color-developing member is made of a material having a hardness of a pencil hardness of 2H or higher.

10. The pressure measurement method according to any one of claims 1 to 4,
    wherein the sensor device is any one of a capacitive type, a pressure-sensitive rubber type, or a TFT type.

11. An information processing device comprising:

    at least one processor,
    wherein the processor

    acquires a color-developing member image that is a captured image after pressure application of a color-developing member that develops color at a density in accordance with an applied pressure in a case in which the pressure is applied to the color-developing member and a sensor device that outputs an output value in accordance with the applied pressure in a state in which the color-developing member and the sensor device are superposed, acquires time-series data of the output value of the sensor device during a pressure application period, and performs a process based on the color-developing member image and the time-series data of the output value of the sensor device, and

a maximum height roughness Rz of a contact surface between the sensor device and the color-developing member in a case in which a pressure of 50 MPa is applied to the sensor device is 20 $\mu$m or less.

12. A program causing at least one processor provided in an information processing device to execute a process comprising:

acquiring a color-developing member image that is a captured image after pressure application of a color-developing member that develops color at a density in accordance with an applied pressure in a case in which the pressure is applied to the color-developing member and a sensor device that outputs an output value in accordance with the applied pressure in a state in which the color-developing member and the sensor device are superposed; acquiring time-series data of the output value of the sensor device during a pressure application period; and performing a process based on the color-developing member image and the time-series data of the output value of the sensor device, wherein a maximum height roughness Rz of a contact surface between the sensor device and the color-developing member in a case in which a pressure of 50 MPa is applied to the sensor device is 20 $\mu$m or less.

# FIG. 1

PRESSURE

30 — COLOR-DEVELOPING MEMBER

20 — SENSOR DEVICE

50 — OBJECT

40

COLOR-DEVELOPING MEMBER IMAGE

10

INFORMATION PROCESSING DEVICE

# FIG. 2A

20

L1

21

L2

22

23

# FIG. 2B

20

21
24
26
22
25

# FIG. 3

10

101 CPU

102 RAM

106 COMMUNICATION INTERFACE

108

NON-VOLATILE MEMORY

110 — PRESSURE MEASUREMENT PROGRAM

120A — FIRST REFERENCE DATA

120B — SECOND REFERENCE DATA

103

DISPLAY

105

INPUT DEVICE

104

# FIG. 4A

120A

| COLOR-DEVELOPING DENSITY VALUE | PRESSURE VALUE [MPa] |
|---|---|
| 0 | 0 |
| 1 | 2 |
| 2 | 2.4 |
| 3 | 2.8 |
| ⋮ | ⋮ |

## FIG. 4B

~120B

| OUTPUT VALUE OF SENSOR DEVICE | PRESSURE VALUE [MPa] |
|---|---|
| 00000000 | 0 |
| 00000001 | 2 |
| 00000010 | 2.4 |
| 00000011 | 2.8 |
| ⋮ | ⋮ |

## FIG. 5

| INFORMATION PROCESSING DEVICE | —10 |
|---|---|
| ACQUISITION UNIT | —11 |
| DERIVATION UNIT | —12 |
| CORRECTION UNIT | —13 |
| DISPLAY PROCESSING UNIT | —14 |

## FIG. 6

```
( START )
      │
ACQUIRE COLOR-DEVELOPING MEMBER IMAGE ── S1
      │
ACQUIRE TIME-SERIES DATA OF OUTPUT VALUE OF
SENSOR DEVICE ── S2
      │
DERIVE PRESSURE DISTRIBUTION DATA BASED ON
COLOR-DEVELOPING MEMBER IMAGE ── S3
      │
DERIVE PRESSURE DISTRIBUTION TIME-SERIES DATA
BASED ON TIME-SERIES DATA OF SENSOR OUTPUT
VALUE ── S4
      │
CORRECT PRESSURE DISTRIBUTION TIME-SERIES DATA
USING PRESSURE DISTRIBUTION DATA ── S5
      │
DISPLAY PRESSURE VALUE AT EACH POSITION AND
EACH POINT IN TIME AFTER CORRECTION ── S6
      │
   ( END )
```

## FIG. 7

PRESSURE

# FIG. 8

# FIG. 9A

PRESSURE

# FIG. 9B

# FIG. 10

## INTERNATIONAL SEARCH REPORT

| | International application No. |
|---|---|
| | **PCT/JP2024/021546** |

**A. CLASSIFICATION OF SUBJECT MATTER**

*G01L 1/00*(2006.01)i; *G01L 25/00*(2006.01)i
FI:   G01L1/00 E; G01L25/00 B

According to International Patent Classification (IPC) or to both national classification and IPC

**B. FIELDS SEARCHED**

Minimum documentation searched (classification system followed by classification symbols)

G01L1/00; G01L5/00; G01L25/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-106527 A (SAMSUNG DISPLAY CO., LTD.) 27 June 2019 (2019-06-27) paragraphs [0033]-[0101], fig. 1-5 | 1-4, 10-12 |
| Y | JP 2014-139017 A (OJI HOLDINGS CORPORATION) 31 July 2014 (2014-07-31) paragraphs [0010]-[0045], fig. 1-5 | 1-4, 10-12 |
| Y | US 2017/0224764 A1 (CORNELL UNIVERSITY) 10 August 2017 (2017-08-10) paragraphs [0339]-[0344], fig. 9-10 | 2-4 |
| A | JP 2020-112783 A (PANASONIC INTELLECTUAL PROPERTY MANAGEMENT CO., LTD.) 27 July 2020 (2020-07-27) paragraphs [0009]-[0117], fig. 1-17 | 1-12 |
| A | JP 2019-195885 A (SEIKO EPSON CORPORATION) 14 November 2019 (2019-11-14) paragraphs [0093]-[0113], fig. 13-18 | 1-12 |
| A | JP 2012-251291 A (FUJIFILM CORPORATION) 20 December 2012 (2012-12-20) paragraphs [0012]-[0031], fig. 1-7 | 1-12 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 July 2024** | **23 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/021546**

| Patent document cited in search report | | | Publication date (day/month/year) | Patent family member(s) | | Publication date (day/month/year) |
|---|---|---|---|---|---|---|
| JP | 2019-106527 | A | 27 June 2019 | KR 10-2019-0071850 | A | |
| JP | 2014-139017 | A | 31 July 2014 | (Family: none) | | |
| US | 2017/0224764 | A1 | 10 August 2017 | (Family: none) | | |
| JP | 2020-112783 | A | 27 July 2020 | (Family: none) | | |
| JP | 2019-195885 | A | 14 November 2019 | (Family: none) | | |
| JP | 2012-251291 | A | 20 December 2012 | (Family: none) | | |

Form PCT/ISA/210 (patent family annex) (July 2022)

**REFERENCES CITED IN THE DESCRIPTION**

**Patent documents cited in the description**

- WO 2021235364 A
- JP 2020123119 A
- JP 2023140447 A